# EUROPEAN PATENT APPLICATION

(11) **EP 4 173 934 A1**
(43) Date of publication of application: **03.05.2023**
(21) Application number: 22205143.5
(22) Date of filing: 02.11.2022
(51) Int. Cl.: B62D 55/24

(54) **ENDLESS TRACK FOR A TRACK SYSTEM AND TRACK SYSTEM COMPRISING SAME**

(30) Priority: 02.11.2021 US 202163274810 P
(71) Applicant: Soucy International Inc., Drummondville, Québec J2B 6W3 (CA)
(72) Inventor: PROVENCHER, Guillaume, St-Germain-de-Grantham, J0C 1K0 (CA); CHAMPAGNE, Olivier, Drummondville, J2B 7B7 (CA); BEDARD, Magella, Drummondville, J2B 0V6 (CA); PLANTE, Martin, Drummondville, J2B 0H7 (CA); LANDRY, Gabriel, Sainte-Madeleine, J0H 1S0 (CA); SAUVAGEAU, Yves, Drummondville, J2B 3Y5 (CA)
(74) Representative: BCF Global

(57) **Abstract**

An endless track (100) for a track system (30) is disclosed. The endless track (100) includes a carcass (102) and a belting member (104) disposed in the carcass (102). The carcass (102) is free of reinforcing member, and includes inner and outer surfaces (110,112), first and second lateral edges (114,116), a plurality of central lugs (120) extending from the inner surface (110) and a plurality of traction projections (122) extending from the outer surface (112). Each central lug of the plurality of central lugs (120) is longitudinally spaced from one another, and the plurality of central lugs (120) are configured to engage with a driving wheel assembly (40). The plurality of traction projections (122) is configured to engage with a ground surface, and at least some of the plurality of traction projections (122) defines outer recesses (162). A track system (30) including the endless track (100) is also disclosed.

## Description

### CROSS-REFERENCE TO RELATED APPLICATION

The present application claims priority to United States Provisional Patent Application No. 63/274,810, filed November 2, 2021 entitled "*Endless Track for a Track System*", which is incorporated by reference herein in its entirety.

### FIELD OF TECHNOLOGY

The present technology relates to endless tracks for track systems and endless track systems for light heavy-duty vehicles.

### BACKGROUND INFORMATION

Certain vehicles, such as, for example, construction or industrial vehicles (e.g., bulldozers, front-end loaders, compact track loaders, skid steer loaders, etc.) and agricultural vehicles (e.g., harvesters, combines, tractors, etc.) are used on ground surfaces that are soft, slippery and/or uneven (e.g., soil, mud, sand, ice, snow, etc.).

Conventionally, such vehicles have had large wheels with tires on them to move the vehicle along the ground surface. Under certain conditions, such tires may have poor traction on some kinds of ground surfaces, and as these vehicles are generally heavy, the tires may compact the ground surface in an undesirable way owing to the weight of the vehicle.

In order to reduce the aforementioned drawbacks, to increase traction and to distribute the weight of the vehicle over a larger area on the ground surface, track systems having endless tracks were developed to be used in place of at least some of the wheels and tires on the vehicles. For example, under certain conditions, track systems enable vehicles to be used in wet field conditions as opposed to its wheeled counterpart.

Conventionally, endless tracks for industrial or construction vehicles can be made of metallic members or can be made of an elastomeric material with rigid laterally extending reinforcing members. These conventional endless tracks can last a long time, but can be very heavy, and thus can require a relatively large amount of energy to move. Additionally, conventional endless tracks can induce vibrations within the endless track can reduce a maximum speed at which a vehicle to which the endless track is connected can travel.

Therefore, there is a desire for an endless track that could mitigate at least some of the above-mentioned issues.

### SUMMARY

It is an object of the present technology to ameliorate at least some of the inconveniences present in the prior art.

According to one aspect of the present technology, there is provided an endless track for a track system. The endless track includes a carcass and a belting member disposed within the carcass. The carcass is free of reinforcing member, and includes an inner surface, an outer surface, a first lateral edge, and a second lateral edge, a plurality of central lugs and a plurality of traction projections. The plurality of central lugs extend from the inner surface, and each central lug of the plurality of central lugs is longitudinally spaced from one another, and the plurality of central lugs is configured to engage with a driving wheel assembly. The plurality of traction projections extend from the outer surface, are configured to engage with a ground surface, and at least some of the plurality of traction projections defining outer recesses. The belting member is disposed within the carcass.

In some embodiments, the plurality of central lugs is configured to laterally guide the endless track with respect to wheel assemblies of the track system.

In some embodiments, each one of the plurality of central lugs has a lug base length and a lug base height, a ratio of the lug height over the lug base length is equal or less than about 80%.

In some embodiments, a ratio of a longitudinal distance between two adjacent central lugs of the plurality of central lugs over the lug base length is equal or less than about 170%.

In some embodiments, the belting member is a single set of cables.

In some embodiments, the belting member includes a primary layer and a secondary layer.

In some embodiments, the endless track defines a neutral axis, and the belting member is generally aligned with the neutral axis.

In some embodiments, the belting member extends along at least about 55% of the track width.

In some embodiments, a vertical distance between the belting member and the inner surface is at least about 13 mm.

In some embodiments, the plurality of traction projections form a plurality of traction projection sets, each one of the plurality of traction projection sets including at least two longitudinally aligned traction projections.

In some embodiments, the plurality of traction projection sets defines an alternating sequence of long traction projections followed by short traction projections.

In some embodiments, the long traction projections are longitudinally aligned with the central lugs.

In some embodiments, at least some of the plurality of traction projections are longitudinally aligned with the plurality of central lugs.

In some embodiments, the plurality of outer recesses is generally aligned with a leading end of a base portion of a central lug, and a trailing end of a base portion of an adjacent central lug.

In some embodiments, the inner surface has a first wheel engaging portion disposed on one side of the plurality of central lugs and a second wheel engaging portion disposed on an other side of the plurality of central lugs, the first lateral edge is vertically lower than the first wheel engaging portion, and the second lateral edge is vertically lower than the second wheel engaging portion.

In some embodiments, the inner surface further includes a first sloped portion extending between the first wheel engaging portion and the first lateral edge and a second sloped portion extending between the second wheel engaging portion and the second lateral edge, and the first and second sloped portions are configured to evacuate debris laterally outwardly from the first and second wheel engaging portions.

In some embodiments, the first and second sloped portions each have sloped portion width and a sloped portion height, and a ratio of the sloped portion height over the sloped portion width is at least about 20%.

In some embodiments, the ratio of the sloped portion height over the sloped portion width is at least about 30%.

In some embodiments, the first and second sloped portions are configured to flex inwardly and absorb a shock when the track system encounters an obstacle on the ground.

In some embodiments, the endless track is for replacing a steel-embedded endless track.

According to another aspect of the present technology, there is provided a track system for a vehicle, the track system including a frame, a plurality of wheel assemblies and an endless track according to the above aspect or according to the above aspect and one or more of the above embodiments. The plurality of wheel assemblies is connected to the frame, and includes at least one of a drive wheel assembly, an idler wheel assembly, and a support wheel assembly. The endless track at least partially surrounds the frame and the plurality of wheel assemblies.

According to another aspect of the present technology, there is provided an endless track for a track system. The endless track includes a track body, which has a wheel-contacting surface, a ground-contacting surface that is distal from the wheel-contacting surface and defining a track thickness, a first lateral edge and a second lateral edge that is distal from the first lateral edge and defining a track width, and a centerline bisecting the track width. The endless track also includes a reinforcing layer embedded in the track body and distal from the wheel-contacting surface, a plurality of central lugs and a plurality of traction lugs. The plurality of central lugs is adapted to be drivingly engageable with a driving wheel assembly, having a lug height, a base length, and a base width, and longitudinally spaced along the centerline and extending from the wheel-contacting surface. The plurality of traction lugs is adapted to engage a ground surface, is longitudinally spaced along the track, extends from the ground-contacting surface, and defines a plurality of inter-lug regions located between adjacent traction lugs. The plurality of central lugs is free of reinforcing members. The wheel-contacting surface is substantially planar. The first lateral portion extends from the first lateral edge to the central lugs and a second lateral portion extending from the second lateral edge to the central lugs are comprised within the wheel-contacting surface.

In some embodiments, the plurality of central lugs is further adapted to laterally guide the endless track with respect to a plurality of wheel assemblies.

In some embodiments, a ratio of the lug height over the base length of one of the central lugs of the plurality of central lugs is equal or less than about 80%.

In some embodiments, a ratio of the longitudinal distance between each of the plurality of central lugs over the base length of the plurality of central lugs is equal or less than about 170%.

In some embodiments, the reinforcing layer is a single layer of reinforcing cables.

In some embodiments, the reinforcing layer further comprises a primary layer and a secondary layer.

In some embodiments, the reinforcing layer is disposed substantially aligned with a neutral axis of the endless track.

In some embodiments, the reinforcing layer extend along at least about 55% of the track width.

In some embodiments, a distance between the wheel-contacting surface and a closer one of the belting member and the neutral axis is at least about 13mm.

In some embodiments, the plurality of traction lugs includes a longitudinally alternating sequence of a long traction lug followed by a short traction lug.

In some embodiments, the long traction lugs are longitudinally aligned with the central lugs.

In some embodiments, the plurality of inter-lug regions is substantially aligned with each extremity of the base length of the central lugs.

In some embodiments, the first and second lateral edges are vertically distal from the wheel-contacting surface.

In some embodiments, the first and second lateral portions further include a first sloped portion and a second sloped portion, respectively, for evacuating debris laterally outwardly from the wheel-contacting surface.

In some embodiments, the first and second sloped portions each have a sloped portion width and a sloped portion height, and a ratio of the sloped portion height over the sloped portion width is at least about 20%.

In some embodiments, the first and second sloped portions further include a radius.

In some embodiments, the first and second sloped portions are configured to flex inwardly and absorb a shock when the track system encounters an obstacle on the ground.

In some embodiments, the ratio of the sloped portion height over the sloped portion width is at least about 30%.

In some embodiments, the tracked vehicle is one of a compact track loader and a tracked skid-steer.

In some embodiments, the endless track is for replacing a steel-embedded endless track.

According to another aspect of the present technology, there is provided a track system for a vehicle. The track system includes a frame, a plurality of wheel assemblies, and an endless track according to one of the above aspects or according to one of the above aspects and one or more of the above embodiments. The plurality of wheel assemblies, which is rotationally connected to the frame, includes a drove wheel assembly operatively connectable to a driving axle of the vehicle for driving the endless track. The endless track is disposed around the frame and the plurality of wheel assemblies. track-engaging assembly, a plurality of wheel assemblies.

In some embodiments, the plurality of wheel assemblies includes a tension wheel assembly and at least one support wheel assembly.

In some embodiments, the tension wheel assembly includes a tensioning system.

In some embodiments, at least two of the plurality of wheel assemblies are configured as a tandem.

According to another aspect of the present technology, there is provided an endless track for a tracked vehicle, the endless track being configured to be disposed around a plurality of wheel assemblies. The endless track includes a carcass and a belting member disposed within the carcass. The carcass has an inner surface, an outer surface, a first lateral edge and a second lateral edge. The outer surface is opposite to the inner surface, and the inner and outer surfaces define a track thickness. The first and second lateral edges define a track width.

The carcass has a plurality of central lugs. The plurality of central lugs is configured to engage a driving wheel assembly, and extends from the inner surface. Each one of the plurality of central lugs is longitudinally spaced from one another, and has a lug height, a lug base, a lug length, and a lug base width. The carcass also has a plurality of traction projections that are configured to engage a ground surface, extend from the outer surface and define a plurality of outer recesses. The carcass is free of reinforcing members. The inner surface is substantially planar.

In some embodiments, the plurality of central lugs is further adapted to laterally guide the endless track with respect to the plurality of wheel assemblies.

In some embodiments, a ratio of the lug height over the base length of a central lug of the plurality of central lugs is equal or less than about 80%.

In some embodiments, a ratio of the longitudinal distance between each of the plurality of central lugs over the base length of the plurality of central lugs is equal or less than about 170%.

In some embodiments, the belting member is a single set of cables.

In some embodiments, the belting member includes a primary layer and a secondary layer.

In some embodiments, the belting member is substantially aligned with a neutral axis of the endless track.

In some embodiments, the belting member extends along at least about 55% of the track width.

In some embodiments, a distance between the belting member and the inner surface is at least about 13mm.

In some embodiments, the plurality of traction projections includes a longitudinally alternating sequence of a long traction lug followed by a short traction lug.

In some embodiments, the long traction lugs are longitudinally aligned with the central lugs.

In some embodiments, the plurality of outer recesses is substantially aligned with each extremity of the base length of the central lugs.

In some embodiments, the inner surface has a first wheel engaging portion and a second wheel engaging portion, and the first lateral edge is vertically lower than the first wheel engaging portion and the second lateral edge is vertically lower than the second wheel engaging portion.

In some embodiments, the inner surface further includes a first sloped portion and a second sloped portion for evacuating debris laterally outwardly from the wheel-contacting surface.

In some embodiments, the first and second sloped portions each have sloped portion width and a sloped portion height, and a ratio of the sloped portion height over the sloped portion width is at least about 20%.

In some embodiments, the first and second sloped portions further include at least one radius.

In some embodiments, the first and second sloped portions are configured to flex inwardly and absorb a shock when the track system encounters an obstacle on the ground.

In some embodiments, the ratio of the sloped portion height over the sloped portion width is at least about 30%.

In some embodiments, the tracked vehicle is one of a compact track loader and a tracked skid-steer.

In some embodiments, the endless track is for replacing a steel-embedded endless track.

According to another aspect of the present technology, there is provided a track system for a vehicle, the track system includes a frame, a plurality of wheel assemblies rotationally connected to the frame, and an endless track according to one of the above aspects or according to one of the above aspects and one or more of the above embodiments, which is disposed around the frame and the plurality of wheel assemblies. The plurality of wheel assemblies includes a drive wheel assemblies operatively connectable to a driving axle of the vehicle for driving the endless track, and a plurality of idler wheel assemblies.

In some embodiments, the plurality of idler wheels includes a tension wheel assembly and at least one support wheel assembly.

In some embodiments, the tension wheel assembly includes a tensioning system.

In some embodiments, at least two of the plurality of idler wheels are configured as a tandem.

In some embodiments, a first idler wheel assembly and a second idler wheel assembly are mounted together to pivot about a pivot axis disposed longitudinally between the first and second idler wheel assemblies.

In some embodiments, the inner surface of the endless track is free of lateral guide lugs.

In some embodiments, the endless track is configured to be laterally guided by only the central lugs.

In some embodiments, the endless track has an inversed T-shape.

In some embodiments, the wheel path height comprises a first wheel path height and a second wheel path height.

According to another aspect of the present technology, there is provide, an endless track for a track system, the endless track consisting of a carcass defining a neutral axis, and a belting member. The carcass has an inner surface, an outer surface opposite to the inner surface, a plurality of longitudinally spaced central lugs extending from the inner surface. The belting member is disposed within the carcass; and is generally aligned with the neutral axis.

In some embodiments, the body of the carcass consists essentially of elastomeric material.

According to another aspect of the present technology, there is provided an endless track for a tracked vehicle, the endless track being configured to be disposed around a plurality of wheel assemblies. The endless track includes a carcass having an inner surface, an outer surface, a first lateral edge, a second lateral edge, a plurality of central lugs and a plurality of tractions lugs.

The outer surface is opposite to the inner surface, and the inner and outer surfaces define a carcass thickness. The first and second lateral edge define a carcass width. The plurality of central lugs is configured to engage a driving wheel assembly, and extend from the inner surface. Each one of the plurality of central lugs are longitudinally spaced from one another, and have a lug height, a lug base, a lug length, and a lug base width. The plurality of traction projections is configured to engage a ground surface, extend from the outer surface and define a plurality of outer recesses. The carcass is free of reinforcing members. The inner surface is substantially planar.

In some embodiments, the endless track further comprises a belting member disposed within the carcass.

In some embodiments, the belting member is disposed along a neutral axis of the carcass.

In some embodiments, the carcass consists essentially of elastomeric material.

According to another aspect of the present technology, there is provided a vehicle including a frame, an engine supported by the frame, and at least two track systems. Each of the track system includes a frame, a plurality of wheel assemblies and an endless track. The endless track includes a carcass free of reinforcing member, the carcass including an inner surface, an outer surface, a first lateral edge, a second lateral edge, a plurality of central lugs, and a plurality of traction projections. The plurality of central lugs extend from the inner surface, each central lug of the plurality of central lugs being longitudinally spaced from one another, and the plurality of central lugs being configured to engage with a driving wheel assembly. The plurality of traction projections extend from the outer surface, the plurality of traction projections being configured to engage with a ground surface, at least some of the plurality of traction projections defining outer recesses. The carcass also includes a belting member disposed within the carcass.

According to another aspect of the present technology, there is provided a vehicle including a frame, an engine supported by the frame, and at least two track systems comprising a frame, a plurality of wheel assemblies, and an endless track. The endless track includes a track body having a wheel-contacting surface, a ground-contacting surface distal from the wheel-contacting surface and defining a track thickness, a first lateral edge and a second lateral edge distal from the first lateral edge and defining a track width, and a centerline bisecting the track width. The endless track also has a reinforcing layer embedded in the track body and distal from the wheel-contacting surface. The endless track also has a plurality of central lugs and a plurality of traction lugs. The plurality of central lugs is adapted to be drivingly engageable with a driving wheel assembly, and each one of the plurality of centra lugs has a lug height, a base length, and a base width, and is longitudinally spaced along the centerline and extends from the wheel-contacting surface. The plurality of traction lugs is adapted to engage a ground surface, and extends from the ground-contacting surface, and define a plurality of inter-lug regions located between adjacent traction lugs. Each one of the plurality of traction lugs is longitudinally spaced from one another. The plurality of central lugs is free of reinforcing members. The wheel-contacting surface is substantially planar. The first lateral portion extends from the first lateral edge to the central lugs and a second lateral portion extends from the second lateral edge to the central lugs. The first and second lateral portions are comprised within the wheel-contacting surface.

According to another aspect of the present technology, there is provided a vehicle including a frame, an engine supported by the frame, and at least two track systems. Each of the at least two track systems includes a frame, a plurality of wheel assemblies and an endless track. The endless track includes a carcass having an inner surface and an outer surface opposite to the inner surface, the inner and outer surfaces defining a track thickness, a first lateral edge and a second lateral edge, the first and second lateral edge defining a track width, a plurality of central lugs configured to engage a driving wheel assembly, the plurality of central lugs being longitudinally spaced and extending from the inner surface, each one of the plurality of central lugs having a lug height, a lug base, a lug length, and a lug base width, and a plurality of traction projections configured to engage a ground surface, the plurality of traction projections extending from the outer surface and defining a plurality of outer recesses. The belting member is disposed within the carcass. The carcass is free of reinforcing members. The inner surface is substantially planar.

In the context of the following description, "outwardly" or "outward" means away from a longitudinal center plane of the track system, and "inwardly" or "inward" means toward the longitudinal center plane. In addition, in the context of the following description, "longitudinally" means in a direction parallel to the longitudinal center plane of the track system in a plane parallel to flat level ground, "laterally" means in a direction perpendicular to the longitudinal center plane in a plane parallel to flat level ground, and "generally vertically" means in a direction contained in the longitudinal center plane along a height direction of the track system generally perpendicular to flat level ground. Also, the term "wheel assemblies" include all the necessary structure (bearing structures, pins, axles and other components) to permit a structure/wheel to pivot/rotate about an axis, as the case may be.

As used herein, the singular form "a," "an" and "the" include plural referents unless the context clearly dictates otherwise.

The recitation herein of numerical ranges by endpoints is intended to include all numbers subsumed within that range (e.g., a recitation of 1 to 5 includes 1, 1.5, 2, 2.75, 3, 3.80, 4, 4.32, and 5).

The term "about" is used herein explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value. For example, the term "about" in the context of a given value or range refers to a value or range that is within 20%, preferably within 15%, more preferably within 10%, more preferably within 9%, more preferably within 8%, more preferably within 7%, more preferably within 6%, and more preferably within 5% of the given value or range.

The expression "and/or" where used herein is to be taken as specific disclosure of each of the two specified features or components with or without the other. For example, "A and/or B" is to be taken as specific disclosure of each of (i) A, (ii) B and (iii) A and B, just as if each is set out individually herein.

As used herein, the term "comprise" is used in its non-limiting sense to mean that items following the word are included, but items not specifically mentioned are not excluded.

As used herein, the expression "consist essentially of' is used to indicate that the product or composition (a) necessarily includes the listed elements; and (b) is open to unlisted elements that do not materially affect the properties of the product or composition.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of implementations of the present technology will become apparent from the following description, the accompanying drawings, and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a perspective view taken from rear, bottom, right side of a track system having an endless track according to an embodiment of the present technology;
Figure 2 is a cross-sectional perspective view of the track system of Figure 1 taken across the plane 2-2 of Figure 1;
Figure 3 is a perspective view taken from rear, top, right side of a portion of the endless track of the track system of Figure 1;
Figure 4A is a perspective view taken from a bottom, rear, right side of the portion of the endless track of Figure 3;
Figure 4B is a perspective view taken from a bottom, rear, right side of a portion of an endless track according to an alternative embodiment of the present technology;
Figure 5 is a front elevation view of the portion of the endless track of Figure 3;
Figure 6 is a right side elevation view with a partial cross-sectional view of the portion of the endless track of Figure 3;
Figure 7 is a top plan view of the portion of the endless track of Figure 3;
Figure 8 is a schematic view of an area covered by part of two adjacent lugs of the portion of the endless track of Figure 3; and
Figure 9 is a schematic view of a portion of the track system of Figure 1 overcoming an obstacle.

### DETAILED DESCRIPTION

The present description is intended to be a description of illustrative examples of the present technology. This description is not intended to define the scope or set forth the bounds of the present technology. In some cases, what are believed to be helpful examples of modifications or alternatives to apparatus may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing or embodying that element of the present technology. As a person skilled in the art would understand, this is likely not the case. In addition, it is to be understood that the apparatus may provide in certain aspects a simple embodiment of the present technology, and that where such is the case it has been presented in this manner as an aid to understanding. As persons skilled in the art would understand, various embodiments of the present technology may be of a greater complexity than what is described herein.

The present technology relates to an endless track which is mountable to a track system. In some instances, the endless track is for replacing a conventional metallic endless track mounted to a track system of a vehicle. In other instances, the endless track is for replacing a polymeric track having laterally extending reinforcing members therein, commonly known as "steel embedded tracks". In yet other instances, the endless track is initially provided with a track system of a vehicle.

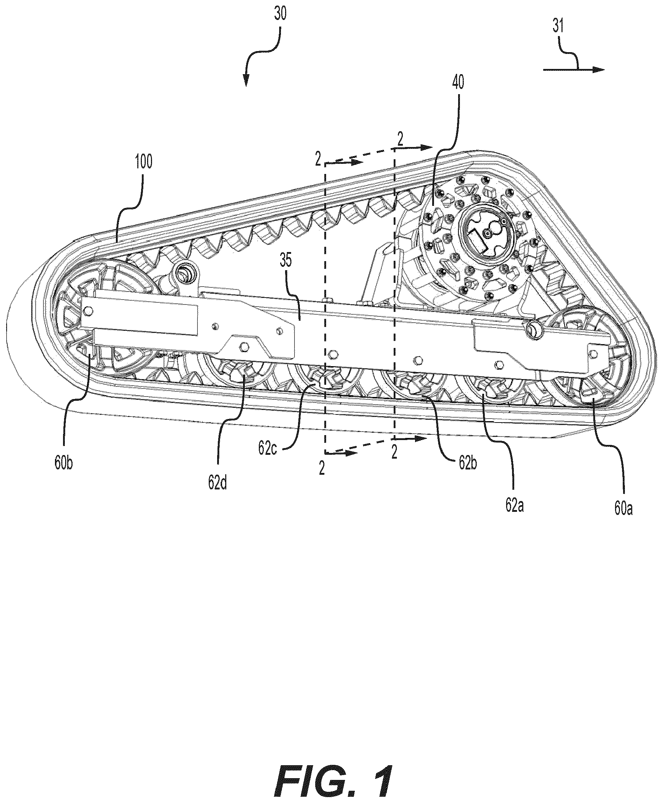

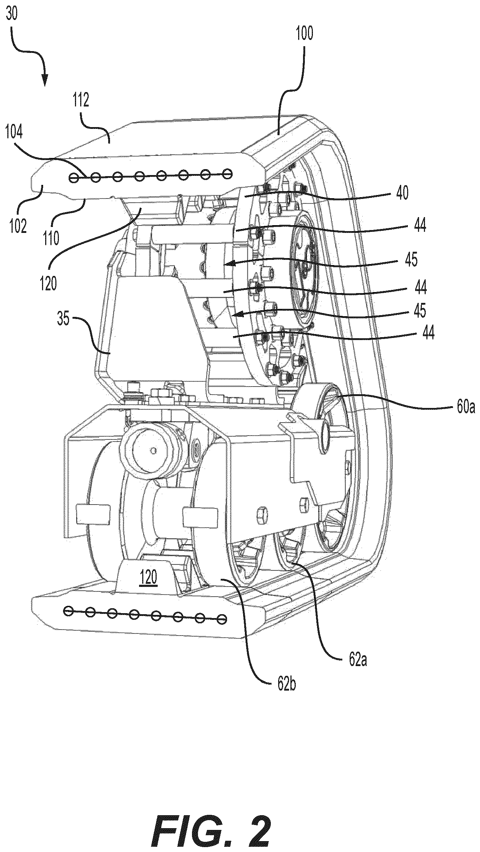

The present technology will be described with reference to a track system 30, which is shown in Figures 1 and 2, and the forward direction of which is indicated by arrow 31. The track system 30 is operatively connectable to a vehicle (not shown). Specifically, the track system 30 is operatively connectable to a shaft of the vehicle.

In some embodiments, the vehicle could be a light heavy-duty vehicle such as, but not limited to, a tracked skid-steer, and mini-excavator. It is also contemplated that in some embodiments, the vehicle could be a medium heavy-duty vehicle and/or a heavy heavy-duty vehicle. It is contemplated that light heavy-duty vehicles could weigh between about 3,000 lbs and about 19,500 lbs, medium heavy-duty vehicles could weigh between about 19,500 lbs and about 33,000 lbs and heavy heavy-duty vehicles could weigh more than about 33,000 lbs. It is further contemplated that in some embodiments, the present technology could be used with other types of vehicles. For example, in some embodiments, the vehicle is industrial or a military vehicle as well.

The track system 30 includes a frame 35, a plurality of wheel assemblies, which includes a sprocket wheel assembly 40, a leading idler wheel assembly 60a, a trailing idler wheel assembly 60b, support wheel assemblies 62a, 62b, 62c, 62d, and an endless track 100.

The frame 35 is a multi-member frame 35, where the various members are fastened to one another. It is contemplated that in other embodiments, the various members could be connected to one another differently, for example via welding or rivets. In some embodiments, the frame 35 could be a unitary frame.

The sprocket wheel assembly 40, which is connected to the frame 35, can be operatively connected to a driving axle (not shown) of the vehicle. It is contemplated that in some embodiments, the sprocket wheel assembly 40 could be connected to a non-driving axle. The driving axle is configured to drive the sprocket wheel assembly 40, such that in some embodiments, the sprocket wheel assembly 40 could be referred to as a driving wheel assembly. The sprocket wheel assembly 40 has engaging members 44 (i.e., teeth) disposed on the circumference of the sprocket wheel assembly 40. The sprocket wheel assembly 40 defines, between each of two engaging members 44, recesses 45. The engaging members 44 and the recesses 45 are adapted, as will be described in greater detail below, to engage with central lugs 120 provided on an inner surface 110 of the endless track 100. It is contemplated that in other embodiments, the configuration of the sprocket wheel assembly 40 could differ without departing from the scope of the present technology.

With continued reference to Figures 1 and 2, the track system 30 includes, as mentioned above, the leading idler wheel assembly 60a, the trailing idler wheel assembly 60b, and the support wheel assemblies 62a, 62b, 62c, 62d. Each of the leading and trailing idler wheel assemblies 60a, 60b and the support wheel assemblies 62a, 62b, 62c, 62d includes two laterally spaced wheels. In some embodiments, one or more of the leading and trailing idler wheel assemblies 60a, 60b and the support wheel assemblies 62a, 62b, 62c, 62d could include a single wheel defining a central recess configured to receive the central lugs 120 therebetween. It is contemplated that in other embodiments, the track system 30 could include a different number of wheel assemblies.

The leading idler wheel assembly 60a is rotationally connected to a leading end of the frame 35.

The support wheel assemblies 62a, 62b, 62c, 62d, which are disposed longitudinally rearwardly from the leading idler wheel assembly 60a, are also rotationally connected to the frame 35. It is contemplated that in some embodiments, the support wheel assemblies 62a, 62b, 62c, 62d could be connected to the frame 35 via support structures enabling a pivotal movement of the support wheel assemblies 62a, 62b, 62c, 62d about a longitudinally extending axis.

The trailing idler wheel assembly 60b is rotationally connected to the frame 35 longitudinally rearwardly from the support wheel assemblies 62a, 62b, 62c, 62d.

It is contemplated that in some embodiments, one of the leading and trailing idler wheels 60a, 60b could be connected to the frame 35 via a tensioner, which is operable to adjust a tension in the endless track 100 by selectively moving one of the leading and trailing idler wheels 60a, 60b toward or away from the frame 35.

The track system 30 also includes the endless track 100, which extends around components of the track system 30, notably the frame 35 and the wheel assemblies, which, as mentioned above, includes the sprocket wheel assembly 40a, the leading idler wheel assembly 60a, the trailing idler wheel assembly 60b, and the support wheel assemblies 62a, 62b, 62c, 62d.

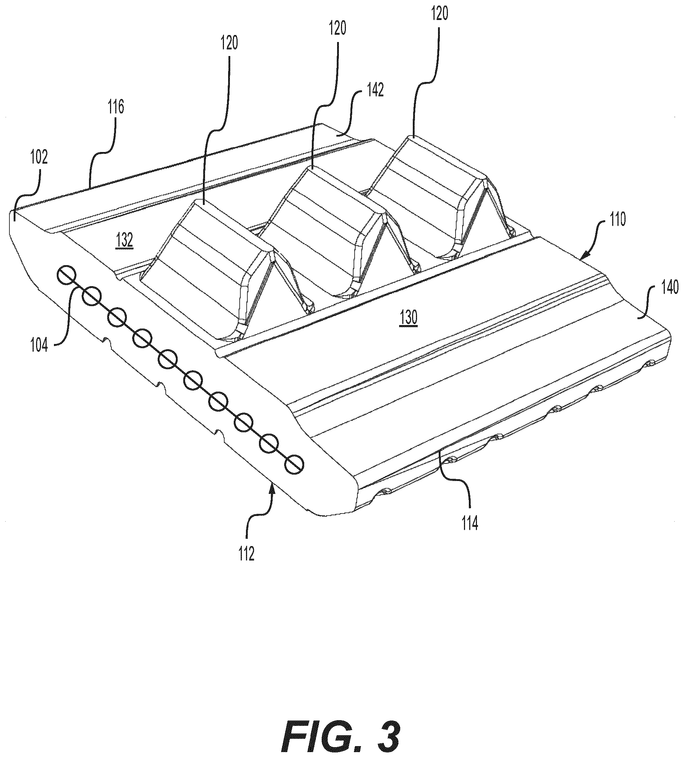

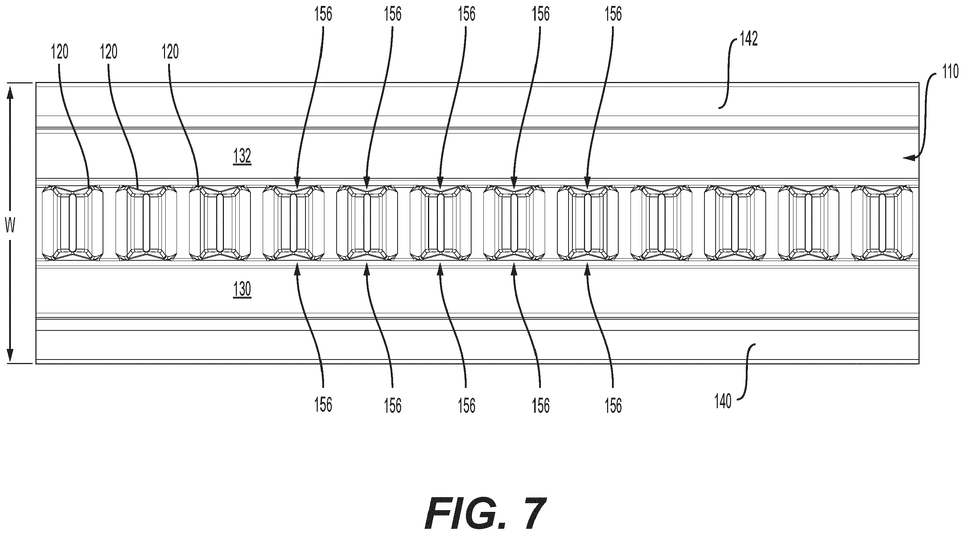

With reference to Figures 3 to 8, the endless track 100 is an elastomeric track that has a carcass 102 and a belting member 104 that is disposed within the carcass 102. The endless track 100 is free of laterally extending reinforcing members. Thus, in some embodiments, the endless track 100 comprises the carcass 100 and the belting member 104. Thus, in some embodiments, the endless track 100 consists of the carcass 100 and the belting member 104.

In some embodiments, the endless track 100 is made of an elastomeric material. In some embodiments, the endless track 100 is made of at least about 90% polymeric material (i.e., carcass 102) and less than about 10% other material (i.e., belting member 104). In other embodiments, the endless track 100 is made of at least about 95% polymeric material (i.e., carcass 102) and less than about 5% other material (i.e., belting member 104). In yet other embodiments, the endless track 100 is made of at least about 98% polymeric material (i.e., carcass 102) and less than about 2% other material (i.e., belting member 104). In yet other embodiments, the endless track 100 is made of at least about 99% polymeric material (i.e., carcass 102) and less than about 1% other material (i.e., belting member 104). In some other embodiments, the endless track 100 consists essentially of elastomeric material.

As will be described in greater detail below, a reduction of rigid material within the endless track 100 can assist in reducing vibrations therein and can assist in reducing energy required to move the endless track 100.

The carcass 102, sometimes referred to herein as a body of the endless track 100, has an inner surface 110 and an outer surface 112 that is spaced from the inner surface 110. The inner and outer surfaces 110, 112 extend laterally from a left lateral edge 114 of the carcass 102 to a right lateral edge 116 of the carcass 102. The carcass 102 further has a plurality of central lugs 120 that extend from the inner surface 110, and a plurality of traction projections 122 that extend from the outer surface 112. The plurality of central lugs 120, and the plurality of traction projections 122 will be described in greater detail herebelow.

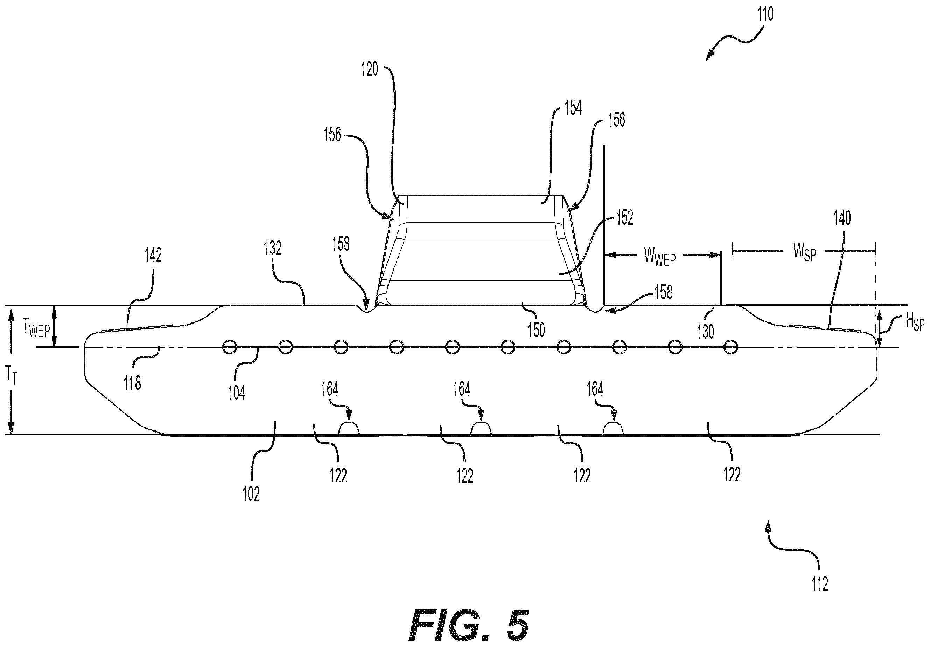

The endless track 100 includes a neutral axis 118 (Figure 5), which is defined by a position of the belting member 104, and which is positioned between the inner and outer surfaces 110, 112. The position of the neutral axis 118 can vary from one embodiment of the endless track 100 to another embodiment of the endless track 100 depending on a variety of factors (e.g., configuration of the carcass 102, configuration of the central lugs 120, density of material, etc.). In some embodiments, the neutral axis 118 passes through a center of gravity of the endless track 100. The position of the neutral axis 118 can impact behaviour of the endless track 100, as depending on the position of the neutral axis 118, the amount of material of the carcass 102 is in tension or in compression. Since the endless track 100 is free of reinforcing member, the position of the belting member 104, and thus the neutral axis 118 can be adjusted without being hindered and/or influenced by reinforcing members. Indeed, in a conventional endless track, the position of its belting member can be dependent on the reinforcing members (e.g., belting member has to be positioned above or below reinforcing members). Thus, as the endless track 100 is free of reinforcing members, the belting member 104 can be adjusted so as to optimize the amount of material of the carcass 102 that is to be in tension and in compression.

Being that the inner surface 110 and the outer surface 112 are spaced from one another, a track thickness T can be measured from the inner surface 110 to the outer surface 112. In some instances, the track thickness T can be measured from a point on the inner surface 110 that is most distant to the neutral axis 118 to a point on the outer surface 112 that is the closest to the neutral axis 118, such that the track thickness T does not include thickness of the traction projections 122. A total track thickness T_{T} of the carcass 102, can be measured from the inner surface 110 to a bottommost surface of the traction projections 122. Additionally, a width W of the carcass 102 can be measured between the left and right lateral edges 114, 116.

With continued reference to Figures 3 to 8, the inner surface 110 will first be described in greater detail. As mentioned above, the carcass 102 has the plurality of central lugs 120, which extend from a central portion of the inner surface 110.

Furthermore, the inner surface 110 has a left wheel engaging portion 130, and a right wheel engaging portion 132. The left and right wheel engaging portions 130, 132 are configured to engage with wheels of the track system 30, such as for example, wheels of the idler and support wheel assemblies 60a, 60b, 62a, 62b, 62c, 62d. The left wheel engaging portion 130 is disposed on a left side of the central lugs 120, and the right wheel engaging portion 132 is disposed on a right side of the central lugs 120. As such, the left and right wheel engaging portions 130, 132 are laterally spaced from one another. Each of the left and right wheel engaging portions 130, 132 has a wheel engaging portion width W_{WEP}. The left and right wheel engaging portions 130, 132 each extend longitudinally along the entire length of the carcass 102, and are configured so that upper surfaces of the left and right wheel engaging portions 130, 132 are positioned vertically above the left and right lateral edges 114, 116. Additionally, the left and right wheel engaging portions 130, 132 are also configured to be above the neutral axis 118. In some instances, a wheel engaging portion thickness T_{WEP} of the left and right wheel engaging portions 130, 132 can be measured from the neutral axis 118 to an upper surface of the left and right wheel engaging portions 130, 132. The wheel engaging portion thickness T_{WEP} is at least about 13mm. In other embodiments, the wheel engaging portion thickness T_{WEP} can be about 14 mm, about 15 mm, about 16 mm, about 17 mm, about 18mm, about 19 mm, or about 20 mm. As will be described in greater detail below, thicker wheel engaging portions 130, 132 may at least assist in reducing vibrations within the endless track 100, and thus reduce vibrations transmitted to the track system 30.

Laterally outwardly from the left and right wheel engaging portions 130, 132, the inner surface 110 has, respectively, left and right sloped portions 140, 142. The left sloped portion 140 is configured to extend laterally outwardly and generally downwardly from the left wheel engaging portion 130, such that an outermost point of the left sloped portion 140 (which in this embodiment corresponds to the left lateral edge 114) is vertically lower than a laterally outermost point of the left wheel engaging portion 130 (which, in this embodiment, corresponds to the intersection between the left sloped portion 140 and the left wheel engaging portion 130). Similarly, the right sloped portion 142 is configured to extend laterally outwardly and generally downwardly from the right wheel engaging portion 140, such that an outermost point of the right sloped portion 142 (which, in this embodiment, corresponds to the right lateral edge 116) is vertically lower than a laterally outermost point of the right wheel engaging portion 142 (which, in this embodiment, corresponds to the intersection between the right sloped portion 142 and the right wheel engaging portion 132). Each one of the left and right sloped portions 140, 142 has a sloped portion width W_{SP}, and a sloped portion height H_{SP}. As best seen in Figure 5, the sloped portion height H_{SP} is substantially equal to the wheel engaging portion thickness T_{WEP}. It is contemplated that in some embodiments, the sloped portion height H_{SP} could be different (e.g., smaller or larger) from the wheel engaging portion thickness T_{WEP}. The left and right sloped portions 140, 142 are inclined. In some instances, a ratio of the sloped portion height H_{SP} over the sloped portion width W_{SP} is at least about 20%. Thus, relative to a horizontal axis (e.g., a projection of an upper surface of the left and right wheel engaging portions 130, 132) the left and right sloped portions 140, 142 are inclined by an angle of about 5 degrees. It is contemplated that the left and right sloped portions 140, 142 could be inclined, such that the ratio of the sloped portion height H_{SP} over the sloped portion width W_{SP} could be at least about 30%, or at least about 35%. It is contemplated that the left and right sloped portions 140, 142 could be inclined, such that the ratio of the the sloped portion height H_{SP} over the sloped portion width W_{SP} could be at least about between about 15% and about 40%. In yet other embodiments, the left and right sloped portions 140, 142 could be inclined by about 20 degrees, about 19 degrees, about 18 degrees, about 17 degrees, about 16 degrees, about 15 degrees, about 14 degrees, about 13 degrees, about 12 degrees, about 11 degrees, about 10 degrees, about 9 degrees, about 8 degrees, about 7 degrees, about 6 degrees, about 5 degrees, about 4 degrees, or about 3 degrees. It is to be noted that the left and right sloped portions 140 do not have guiding lugs as is commonly the case in conventional industrial endless tracks. The absence of these guiding lugs can assist in providing a cheaper endless track, as less material is required to manufacture the endless track. Furthermore, the absence of these guiding lugs can also assist in evacuation of debris, as these guiding lugs can act as obstacles.

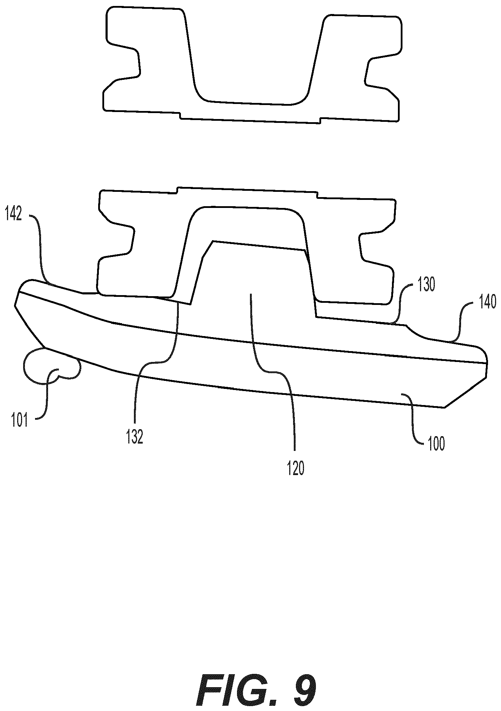

The presence of the left and right sloped portions 140, 142 can, in some instances, assist in the evacuation of debris such as mud or snow that may accumulate on the inner surface 110. Additionally, the presence of the left and right sloped portions 140, 142 can reduce the amount of material required to manufacture the endless track 100, which in turn can make the endless track 100 lighter and cheaper to manufacture. Furthermore, as shown in Figure 9, the left and right sloped portions 140, 142 are configured to deform inwardly when the endless track 100 encounters an obstacle. It is understood that the left and right sloped portions 140, 142, being that there is less material, may be deformable.

As best seen in Figure 3, the plurality of central lugs 120 projects from a central portion of the carcass 102 along an entire length of thereof. The central lugs 120 are longitudinally spaced from one another. Each one of the central lugs 120 is spaced from another one of the central lugs 120 by a pitch P. The pitch P can be measured from a longitudinal center of one of the central lugs 120 to the longitudinal center of an adjacent central lug 120. The central lugs 120 are configured to engage with the engaging members 44 of the sprocket wheel assembly 40. As the central lugs 120 are similar to one another, only one central lug 120 will be described in detail herewith.

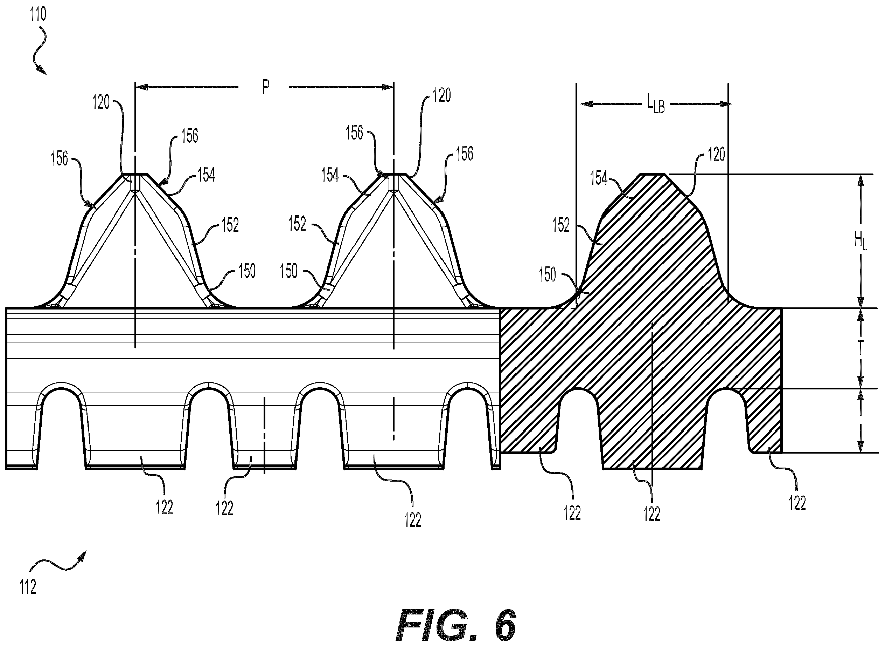

The central lug 120 has a base portion 150, an intermediate portion 152 and a top portion 154. A bottom of the base portion 150 is generally coincident with the upper surface of the left and right wheel engaging portions 130, 132. In the embodiment illustrated in Figure 5, front and rear ends of the base portion 150 define fillets (i.e., rounded portions of the front and rear ends of the base portion 150) and the carcass defines, on the left and right sides of the central lug 120, a left undercut 156 and a right undercut 158. The fillets and the undercuts 156, 158 can assist in reducing stresses in the central lugs 120 and the endless track 100. The central lug 120 is tapered, such that the intermediate portion 152 decreases in length and in width from the base portion 150 to the top portion 154, and the top portion 154 decreases in length and in width from the intermediate portion 152 to a top of the top portion 154. Additionally, as best seen in Figure 6, the top portion 154 extends at an angle from the intermediate portion 152 (i.e., the top portion 154 is tapered). This angled configuration of the top portion 154 can optimize engagement between the central lugs 120 and the sprocket wheel assembly 40. As will be described below, this tapered configuration can impact rigidity of the central lug 120 (e.g., base portion 150 can be harder to deform than the intermediate portion 152 and the top portion 154, and the intermediate portion 152 can be harder to deform than the top portion 154 due to there being more material in the base portion 150 than in the intermediate portion 152 and the top portion 154, and more material in the intermediate portion 152 than the top portion 154). The central lug 120 defines recesses 156 that extend in the base portion 140, in the intermediate portion 152 and in the top portion 154. The recesses 156 can assist in reducing the amount of material required to manufacture the endless track 100. As shown in Figure 9, the left and right sides of the central lug 129 can be configured to be generally parallel with inner surfaces of the wheels of the idler and support wheel assemblies 60a, 60b, 62a, 62b, 62c, 62d to guide the endless track 100. This can assist in reducing premature wear due to friction between the central lugs 120 and the endless track 100.

The central lug 120 has a longitudinal rigidity and a lateral rigidity. It is contemplated that the longitudinal and lateral rigidities could be different from one another (i.e., the modulus of elasticity in the longitudinal direction could be different from the modulus of elasticity in the lateral direction). It is contemplated that in some embodiments, the longitudinal and/or lateral rigidities could vary from between the base, intermediate and top portions 150, 152, 154. This can, for example, be a result of the varying amount of the elastomeric material between the base, intermediate, and top portions 150, 152, 154 As will be described in greater detail below, the central lug 120 is configured to drive the endless track 100 as well as laterally guide the endless track 100. Given that the central lugs 120 are configured to drive as well as guide the endless track 100, in some embodiments of the present technology, the carcass 102 does not have lateral guide lugs.

With continued reference to Figure 3, 4A and 5 to 8, the central lug 120 has a lug height H_{L} and a lug base length L_{LB}, where the lug height H_{L} is measured from the base portion 150 of the central lug 120 to the apex of the top portion 154, and where the lug base length L_{LB} is measured from a forward end of the base portion 150 to a rear end of the base portion 150.

A ratio of the lug height H_{L} over the lug base length L_{LB} is equal to or less than about 80%. In some embodiments, the ratio of the lug height H_{L} over the lug base length L_{LB} is about 705%. In some embodiments, the ratio of the lug height H_{L} over the lug base length L_{LB} is about 70%.

A ratio of the pitch P over the lug base length L_{LB} is equal to or less than about 170%. In some embodiments, the ratio of the pitch P over the lug base length L_{LB} could be equal to or less than about 160%. In other embodiments, the ratio of the pitch P over the lug base length L_{LB} could be equal to or less than about 150%.

As will be described in greater detail below, the lug height H_{L}, the lug base length L_{LB}, the ratio of the lug height H_{L} over the lug base length L_{LB}, and the ratio of the ratio of the pitch P over the lug base length L_{LB} can each impact the rigidity of the central lugs 120 as well as the guiding of the carcass 102.

With reference to Figures 3, 4A, and 5 to 8, the outer surface 112 of the carcass 102 from which, as mentioned above, the traction projections 122 extend, will now be described. In the present embodiment, there is a plurality of traction projections 122 that are longitudinally aligned and form a traction projection set 160. In some embodiments, there could be, for example, two traction projections 122 per traction projection set 160. In other embodiments, there could be three traction projections 122 per traction projection set 160. In some embodiments, there could be four traction projections 122 per traction projection set 160. In other embodiments, there could be five traction projections 122 per traction projection set 160. In yet other embodiments, such as the one illustrated in Figure 5, some of the projection sets 160 could include four traction projections, and other projection sets 160 could include five traction projections. The traction projections 122 per given traction projection set 160 are spaced apart by recesses 164. Whereas, in the present embodiment, the recesses 164 generally define an hourglass shape, other shapes could be contemplated in other embodiments. The carcass 102 has a plurality of traction projection sets 160 that are longitudinally spaced from one another, thereby defining outer recesses 162 extending between the left and right lateral edges 114, 116. The outer recesses 162 reduce the amount of material required to manufacture the endless track 100, which can result in making the endless track 102 lighter and cheaper to manufacture. It is contemplated that the outer recesses 162 could be longitudinally offset from the central lugs 120 resulting in the traction projection sets 160 being longitudinally aligned with the central lugs 120. In some instances, this configuration could result in an enhancement of the efficiency of the endless track 100. For example, when the engaging members 44 of the sprocket wheel assembly 40 engage the central lugs 120 to drive the endless track 100, the longitudinal alignment between the central lugs 120 and the traction projection sets 160 (i.e., central lugs 120 and traction projections 122) and the central lugs 120 results in minimizing slippage when the engaging members 44 of the sprocket wheel assembly 40 engage the central lugs 120.

It is contemplated that in other embodiments, the configuration of the outer tread could differ from the configuration of the present embodiment. For instance, in some embodiments, some of the traction projection sets 160 could have a height that is shorter than the height of the other traction projection sets 160 of the track (e.g., short and tall sets), wherein the height of the traction projections 122 of the short sets is smaller than the height of the traction projections 122 of the tall sets, when height is measured from the outer surface 112 to the furthermost point of the traction projection 122 relative to the neutral axis 118. The height of the traction projections 122 can have an impact on the rolling resistance of the endless track 100. Specifically, as the height of the traction projections 122 increases by making the thickness T smaller, the endless track 100 becomes more flexible, such that rolling resistance is decreased. Additionally, length of the traction projections 122 can also vary from one traction projection set 160 to another.

In some embodiments, a given one of the traction projection sets 160 could include a combination of short traction projections 122 and tall traction projections 122 (shown in Figure 6). In these embodiments, the outer tread could be configured so that the tall sets are longitudinally aligned with the central lugs 120 whereas the short sets are disposed longitudinally between (i.e., longitudinally offset from) the central lugs 120. In some instances, the outer recesses 162 could be configured to be longitudinally aligned with the front and rear ends of the base portions 150 of the central lugs 120.

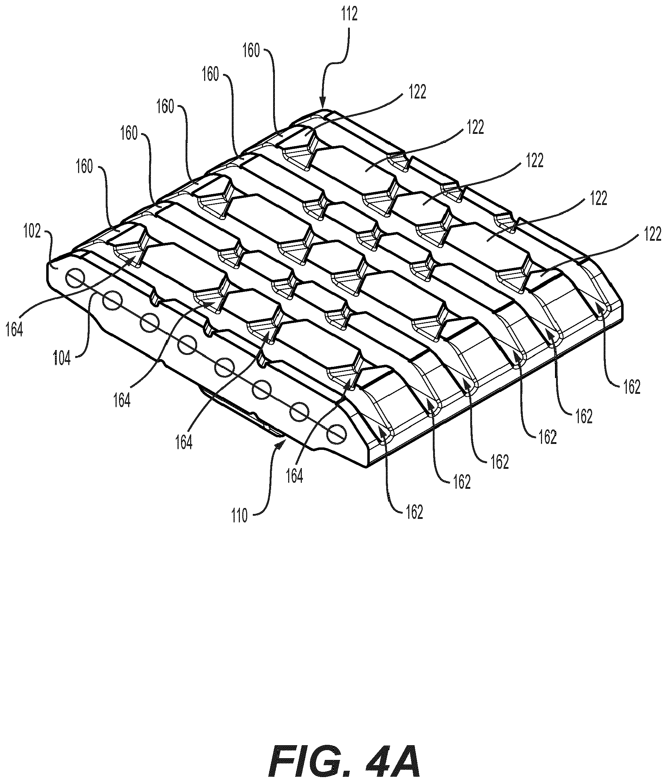

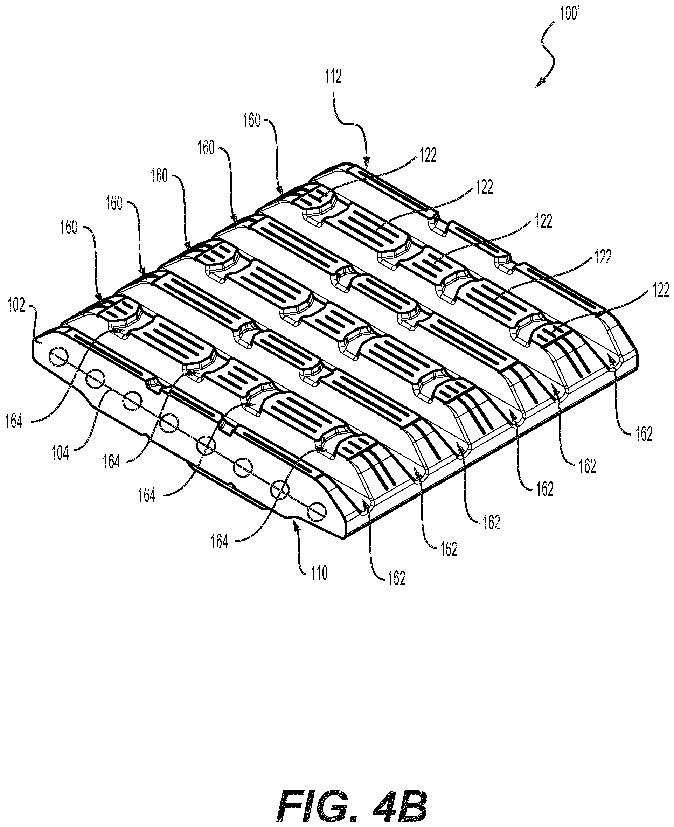

With reference to Figure 4B, an alternative embodiment of the endless track 100, namely endless track 100', is shown. The endless track 100' is similar to the endless track 100, and hence will not be described in detail herewith. The outer surface 112 of the endless track 100' is different from the outer surface 112 of the endless track 100. Notably, the shape of the recesses 164 vary from one traction projection set 160 to another.

In the present embodiment, the belting member 104 is a layer of longitudinally extending cables disposed within the carcass 102. It is contemplated that in some embodiments, the layer could include a single cable, whereas in other embodiment, it could include a plurality of cables. In some embodiments, the belting member 104 could comprise two or more layers laterally, longitudinally and/or vertically spaced from one another. In some embodiments, the second layer could be a fabric, a mesh or another secondary structure. For example, some embodiments, the belting member 104 could include a primary layer made of longitudinal extending metallic cables, and a secondary layer made of a mesh interconnected to the primary layer. The belting member 104 extends along about 55% of the track width W. It is contemplated that in some embodiments, the belting member 104 could extend more or less than about 55% of the track width W. In some embodiments, the belting member 104 could extend under the left and right wheel engaging portions 130, 132. In some embodiments, the belting member 104 does not extend below the left and right sloped portions 140, 142 so as to ensure the flexibility of the endless track 102 at those regions is not affected.

In the present embodiment, the cables of the belting member 104 are made of steel, however, it is contemplated that the cables could be made of different materials such as natural fibers or nylon without departing from the present technology.

In some embodiments, the belting member 104 is configured to generally limit, amongst other things, the longitudinal elongation of the carcass 102 and/or the longitudinal deformation. For instance, when the endless track 100 is subjected to forces causing it to deform into a sinuous shape, the belting member 104 can limit the sinuous deformation.

The belting member 104 is positioned to be generally aligned with the neutral axis 118 of the endless track 100 such as to assist in reducing stresses and strains that the endless track 100 may be subjected to. A ratio of the distance between the position of the belting member 104 and the upper surface of the left and right wheel engaging portions 140, 142 (inner surface 110) over the track thickness T can be measured. In some embodiments, the ratio can be about 30%. In other embodiments, the ratio can be about 20%, about 25%, about 35%, about 40%, about 45%, about 50%, about 55%.

Some advantages of the present technology over conventional endless tracks will now be described.

With the electrification of vehicles, there is a desire and a need to modify various systems and subsystems (such as track systems) to minimize their energy consumption and to increase the autonomy of said vehicles per given battery charge. Additionally, as vehicles become more sophisticated, they are capable of carrying higher loads, and the track systems and the endless tracks should, while reducing energy consumption thereof, also be configured to withstand these higher loads.

Conventional endless tracks for use with vehicles such as tractors have laterally extending reinforcing members therein. These laterally extending reinforcing members, while allowing to increase the life of their endless tracks, also cause an increase in the amount of energy required to move the conventional endless track. The laterally extending reinforcing members can also increase vibrations in the endless tracks, thereby reducing the maximum speed at which the vehicle can travel.

Because the endless track of the present technology is free of the reinforcing members (e.g., free of laterally reinforcing members), its weight is lighter than conventional track with reinforcing members. This absence of reinforcing members allows to decrease the energy required to move the endless track of the present technology.

Furthermore, rather than having two or more sets of lugs (e.g., lateral guiding lugs), the endless track of the present technology has a single set of longitudinally spaced lugs (i.e., central guide lugs 120) that guide the endless track, which reduces the overall weight of the track. As shown, in Figure 9, the central lugs 120 are configured to engage inner surfaces of the wheels of the idler and support wheel assemblies 60a, 60b, 62a, 62b, 62c, 62d to guide the endless track 100 (e.g., prevent the endless track 100 from detracking from the frame 35). When the track system 35 encounters an obstacle 101, the endless track 100 deforms. Specifically, the right sloped portion 142 deforms such that it flexes inwardly. Its deformation is facilitated by the absence of the belting member 104 in the left and right sloped portions 140, 142. As a result of the deformation, the endless track 100 moves relative to the support wheel assembly 62a (although the support wheel assembly 62a is described in this example, it is understood that the same can apply to the other wheel assemblies). To guide the endless track 100, and to prevent detracking thereof, the central lug 120 engages an inner surface of the support wheel assembly 62a. The configuration of the base, intermediate and top portions 150, 152, 154 facilitates the engagement to the inner surface of the support wheel assembly 62a. The lateral rigidity is sufficiently rigid to assist in guiding the endless track 100. The lug height H_{L}, the lug base length L_{LB}, the ratio of the lug height H_{L} over the lug base length L_{LB} and the ratio of the pitch P over the lug base length L_{LB} can all be adjusted to better guide the endless track 100. When the ratio of the lug height H_{L} over the lug base length L_{LB} exceeds about 60%, the central lug 120 may be too laterally flexible such that the lateral rigidity could not be sufficient to assist in guiding the endless track 100. Similarly, when the ratio of the pitch P over the lug base length L_{LB} exceeds about 150%, it can result in the central lugs 120 being too far from one another, negatively impacting the performance of the lug in guiding the endless track. As an illustrative example, if the ratio of the pitch P over the lug base length L_{LB} is too large, then at one point, there may be no central lug 120 guiding one of the wheel assemblies, such that a movement of the endless track 100 relative to the wheel assemblies would be prone to the endless track detracking.

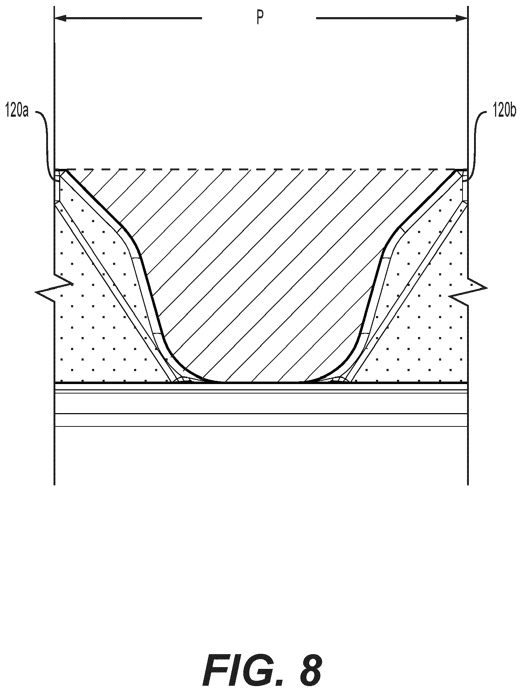

Figure 8 shows a close-up of two central lugs 120, a leading central lug 120a and a trailing central lug 120b, which can, in some instances, engage the inner sides of one of the idler and support wheel assemblies. A ratio of a central lug area (showed in a dot hatched area) over a non-lug area (shown in a line hatched area), which can also be described as lug density in the given area, can impact the performance of the central lugs 120 to guide the endless track 100, as described hereabove

Additionally, the ratio of the wheel engaging portion thickness T_{WEP} over track thickness T, the ratio of the distance between the belting member 104 and the upper surface of the left and right wheel engaging portions 140, 142 over the track thickness T, the ratio of the lug height H_{L} over the lug base length L_{LB}, the configuration of the left and right sloped portion 140, 142, and/or the outer recesses 162 can contribute in reducing the rolling resistance of the endless track 100,t thereby resulting in reducing energy required to move the endless track 100.

### CLAUSES

First clause: An endless track for a track system, the endless track comprising: a carcass free of reinforcing member, the carcass including: an inner surface; an outer surface; a first lateral edge; a second lateral edge; a plurality of central lugs extending from the inner surface, each central lug of the plurality of central lugs being longitudinally spaced from one another, and the plurality of central lugs being configured to engage with a sprocket wheel assembly; a plurality of traction projections extending from the outer surface, the plurality of traction projections being configured to engage with a ground surface, at least some of the plurality of traction projections defining outer recesses; and a belting member disposed within the carcass.

Second clause: The endless track of the first clause, wherein the plurality of central lugs is configured to laterally guide the endless track with respect to wheel assemblies of the track system.

Third clause: The endless track of the previous clauses, wherein each one of the plurality of central lugs has a lug base length and a lug base height, a ratio of the lug height over the lug base length is equal or less than about 80%.

Fourth clause: The endless track of the third clause, wherein a ratio of a longitudinal distance between two adjacent central lugs of the plurality of central lugs over the lug base length is equal or less than about 170%.

Fifth clause: The endless track of any one of the previous clauses, wherein the belting member is a single set of cables.

Sixth clause: The endless track of any one of the previous clauses, wherein the belting member includes a primary layer and a secondary layer.

Seventh clause: The endless track of any one of the previous clauses, wherein the endless track defines a neutral axis, and the belting member is generally aligned with the neutral axis.

Eight clause: The endless track of any one of the previous clauses, wherein the belting member extends along at least about 55% of the track width.

Nineth clause: The endless track of any one of the previous clauses, wherein a vertical distance between the belting member and the inner surface is at least about 13 mm.

Tenth clause: The endless track of any one of the previous clauses, wherein the plurality of traction projections form a plurality of traction projection sets, each one of the plurality of traction projection sets including at least two longitudinally aligned traction projections.

Eleventh clause: The endless track of the tenth clause, wherein the plurality of traction projection sets defines an alternating sequence of long traction projections followed by short traction projections.

Twelfth clause: The endless track of the eleventh clause, wherein the long traction projections are longitudinally aligned with the central lugs.

Thirteenth clause: The endless track of any one of the previous clauses, wherein at least some of the plurality of traction projections are longitudinally aligned with the plurality of central lugs.

Fourteenth clause: The endless track of any one of the previous clauses, wherein the plurality of outer recesses is generally aligned with a leading end of a base portion of a central lug, and a trailing end of a base portion of an adjacent central lug.

Fifteenth clause: The endless track of any one of the previous clauses, wherein the inner surface has a first wheel engaging portion disposed on one side of the plurality of central lugs and a second wheel engaging portion disposed on an other side of the plurality of central lugs, the first lateral edge is vertically lower than the first wheel engaging portion, and the second lateral edge is vertically lower than the second wheel engaging portion.

Sixteenth clause: The endless track of the fifteenth clause, wherein the inner surface further includes a first sloped portion extending between the first wheel engaging portion and the first lateral edge and a second sloped portion extending between the second wheel engaging portion and the second lateral edge, and the first and second sloped portions are configured to evacuate debris laterally outwardly from the first and second wheel engaging portions.

Seventeenth clause: The endless track of the sixteenth clause, wherein the first and second sloped portions each have sloped portion width and a sloped portion height, and a ratio of the sloped portion height over the sloped portion width is at least about 20%.

Eighteenth clause: The endless track of the seventeenth clause, wherein the ratio of the sloped portion height over the sloped portion width is at least about 30%.

Nineteenth clause: The endless track of any one of the sixteenth to the eighteenth clauses, wherein the first and second sloped portions are configured to flex inwardly and absorb a shock when the track system encounters an obstacle on the ground.

Twentieth clause: The endless track of any one of the previous clauses, wherein the endless track is for replacing a steel-embedded endless track.

Twenty-first clause: A track system for a vehicle, the track system comprising: a frame; a plurality of wheel assemblies connected to the frame, the plurality of assemblies including at least one of a sprocket wheel assembly, an idler wheel assembly; and a support wheel assembly; and an endless track according to any one of the previous clauses at least partially surrounding the frame and the plurality of wheel assemblies.

Twenty-second clause: An endless track for a track system, the endless track comprising: a carcass having: a wheel-contacting surface, a ground-contacting surface distal from the wheel-contacting surface and defining a track thickness, a first lateral edge and a second lateral edge distal from the first lateral edge and defining a track width, a centerline bisecting the track width, and a reinforcing layer embedded in the track body and distal from the wheel-contacting surface; a plurality of central lugs adapted to be drivingly engageable with a sprocket wheel assembly, having a lug height, a base length, and a base width, and longitudinally spaced along the centerline and extending from the wheel-contacting surface; a plurality of traction lugs adapted to engage a ground surface, longitudinally spaced along the track and extending from the ground-contacting surface, and defining a plurality of inter-lug regions located between adjacent traction lugs; the plurality of central lugs being free of reinforcing members, the wheel-contacting surface being substantially planar; and a first lateral portion extending from the first lateral edge to the central lugs and a second lateral portion extending from the second lateral edge to the central lugs are comprised within the wheel-contacting surface.

Twenty-third clause: The endless track of the twenty-second clause, wherein the plurality of central lugs is further adapted to laterally guide the endless track with respect to a plurality of wheel assemblies.

Twenty-fourth clause: The endless track of the twenty-second or the twenty-third clause, wherein a ratio of the lug height over the base length of one of the central lugs of the plurality of central lugs is equal or less than about 80%.

Twenty-fifth clause: The endless track of any one of the twenty-second clause to the twenty-fourth clause, wherein a ratio of the longitudinal distance between each of the plurality of central lugs over the base length of the plurality of central lugs is equal or less than about 170%.

Twenty-sixth clause: The endless track of any one of the twenty-second clause to the twenty-fifth clause, wherein the reinforcing layer is a single layer of reinforcing cables.

Twenty-seventh clause: The endless track of any one of the twenty-second clause to the twenty-fifth clause, wherein the reinforcing layer further comprises a primary layer and a secondary layer.

Twenty-eight clause: The endless track of any one of the twenty-second clause to the twenty-seventh clause, wherein the reinforcing layer is disposed substantially aligned with a neutral axis of the endless track.

Twenty-nineth clause: The endless track of any one of the twenty-second clause to the twenty-eight clause, wherein the reinforcing layer extend along at least about 55% of the track width.

Thirtieth clause: The endless track of any one of the twenty-second to the twenty-nineth clause, wherein a distance between the wheel-contacting surface and a closer one of the belting member and the neutral axis is at least about 13 mm.

Thirty-first clause: The endless track of any one of the twenty-second clause to the thirtieth clause, wherein the plurality of traction lugs includes a longitudinally alternating sequence of a long traction lug followed by a short traction lug.

Thirty-second clause: The endless track of the thirty first clause wherein the long traction lugs are longitudinally aligned with the central lugs.

Thirty-third clause: The endless track of any one of the twenty-second clause to the thirty-second clause, wherein the plurality of inter-lug regions is substantially aligned with each extremity of the base length of the central lugs.

Thirty-fourth clause: The endless track of any one of the twenty-second clause to the thirty-third clause, wherein the first and second lateral edges are vertically distal from the wheel-contacting surface.

Thirty-fifth clause: The endless track of any one of the twenty-second clause to the thirty-fourth clause, wherein the first and second lateral portions further include a first sloped portion and a second sloped portion, respectively, for evacuating debris laterally outwardly from the wheel-contacting surface.

Thirty-sixth clause: The endless track of the thirty-fifth clause, wherein the first and second sloped portions each have a sloped portion width and a sloped portion height, and a ratio of the sloped portion height over the sloped portion width is at least about 20%.

Thirty-seventh clause: The endless track of the thirty-fifth clause or the thirty-sixth clause, wherein the first and second sloped portions further include a radius.

Thirty-eight clause: The endless track of any one of the thirty-fifth clause to the thirty-seventh clause, wherein the first and second sloped portions are configured to flex inwardly and absorb a shock when the track system encounters an obstacle on the ground.

Thirty-nineth clause: The endless track of the thirty-sixth clause, wherein the ratio of the sloped portion height over the sloped portion width is at least about 30%.

Fortieth clause: The endless track of any one of the twenty-second clause to the thirty-nineth clause, wherein the tracked vehicle is one of a compact track loader and a tracked skid-steer.

Forty-first clause: The endless track of any one of the twenty-second clause to the fortieth clause, wherein the endless track is for replacing a steel-embedded endless track.

Forty-second clause: A track system for a vehicle, the track system comprising a frame; a plurality of wheel assemblies rotationally connected to the frame, the plurality of wheel assemblies including: a sprocket wheel assembly operatively connectable to a driving axle of the vehicle for driving the endless track, and a plurality of idler wheel assemblies, an endless track as claimed in any one of claims 22 to 41 disposed around the frame and the plurality of wheel assemblies.

Forty-third clause: The track system of the forty-second clause, wherein the plurality of wheel assemblies includes a tension wheel assembly and at least one support wheel assembly.

Forty-fourth clause: The track system of thirty-third clause, wherein the tension wheel assembly includes a tensioning system.

Forty-fifth clause: The track system of any one of the forty-second clause to the forty-fourth clause, wherein at least two of the plurality of wheel assemblies are configured as a tandem.

Forty-sixth clause: An endless track for a tracked vehicle, the endless track being configured to be disposed around a plurality of wheel assemblies, and the endless track comprising: a carcass having: an inner surface and an outer surface opposite to the inner surface, the inner and outer surfaces defining a track thickness; a first lateral edge and a second lateral edge, the first and second lateral edge defining a track width; a plurality of central lugs configured to engage a sprocket wheel assembly, the plurality of central lugs being longitudinally spaced and extending from the inner surface, each one of the plurality of central lugs having a lug height, a lug base, a lug length, and a lug base width; a plurality of traction projections configured to engage a ground surface, the plurality of traction projections extending from the outer surface and defining a plurality of outer recesses; and a belting member disposed within the carcass; the carcass being free of reinforcing members, and the inner surface being substantially planar.

Forty-seventh clause: The endless track of the forty-sixth clause, wherein the plurality of central lugs is further adapted to laterally guide the endless track with respect to the plurality of wheel assemblies.

Forty-eight clause: The endless track of the forty-sixth clause or the forty-seventh clause, wherein a ratio of the lug height over the base length of a central lug of the plurality of central lugs is equal or less than about 80%.

Forty-nineth clause: The endless track of any one of the forty-sixth clause to the forty-eight clause, wherein a ratio of the longitudinal distance between each of the plurality of central lugs over the base length of the plurality of central lugs is equal or less than about 170%.

Fiftieth clause: The endless track of the forty-sixth clause to the forty-nineth clause, wherein the belting member is a single set of cables.

Fifty-first clause: The endless track of the forty-sixth clause to the forty-nineth clause, wherein the belting member includes a primary layer and a secondary layer.

Fifty-second clause: The endless track of the forty-sixth clause to the fiftieth clause, wherein the belting member is substantially aligned with a neutral axis of the endless track.

Fifty-third clause: The endless track of the forty-sixth clause to the fifty-second clause, wherein the belting member extends along at least about 55% of the track width.

Fifty-fourth clause: The endless track of the forty-sixth clause to the fifty-third clause, wherein a distance between the belting member and the inner surface is at least about 13 mm.

Fifty-fifth clause: The endless track of the forty-sixth clause to the fifty-forth clause, wherein the plurality of traction projections includes a longitudinally alternating sequence of a long traction lug followed by a short traction lug.

Fifty-sixth clause: The endless track of the fifty-fifth clause, wherein the long traction lugs are longitudinally aligned with the central lugs.

Fifty-seventh clause: The endless track of the forty-sixth clause to the fifty-sixth clause, wherein the plurality of outer recesses is substantially aligned with each extremity of the base length of the central lugs.

Fifty-eight clause: The endless track of the forty-sixth clause to the fifty-seventh clause, wherein the inner surface has a first wheel engaging portion and a second wheel engaging portion, and the first lateral edge is vertically lower than the first wheel engaging portion and the second lateral edge is vertically lower than the second wheel engaging portion.

Fifty-nineth clause: The endless track of the forty-sixth clause to the fifty-eight clause, wherein the inner surface further includes a first sloped portion and a second sloped portion for evacuating debris laterally outwardly from the wheel-contacting surface.

Sixtieth clause: The endless track of the fifty-nineth clause, wherein the first and second sloped portions each have sloped portion width and a sloped portion height, and a ratio of the sloped portion height over the sloped portion width is at least about 20%.

Sixty-first clause: The endless track of the fifty-nineth clause or of the sixtieth clause, wherein the first and second sloped portions further include at least one radius.

Sixty-second clause: The endless track of any one of the fifty-nineth clause to the sixty-first clause, wherein the first and second sloped portions are configured to flex inwardly and absorb a shock when the track system encounters an obstacle on the ground.

Sixty-third clause: The endless track of any one of the sixtieth clause to the sixty-second clause, wherein the ratio of the sloped portion height over the sloped portion width is at least about 30%.

Sixty-fourth clause: The endless track of any one of the forty-sixth clause to the sixty-third clause, wherein the tracked vehicle is one of a compact track loader and a tracked skid-steer.

Sixty-fifth clause: The endless track of any one of the forty-sixth clause to the sixty-forth clause, wherein the endless track is for replacing a steel-embedded endless track.

Sixty-sixth clause: A track system for a vehicle, the track system comprising a frame; a plurality of wheel assemblies rotationally connected to the frame, the plurality of wheel assemblies including: a sprocket wheel assembly operatively connectable to a driving axle of the vehicle for driving the endless track, and a plurality of idler wheel assemblies, and an endless track as claimed in any one of claims 46 to 65 disposed around said frame and the plurality of wheel assemblies.

Sixty-seventh clause: The track system of the sixty-sixth clause, wherein the plurality of idler wheels includes a tension wheel assembly and at least one support wheel assembly.

Sixty-eighth clause: The track system of the sixty-seventh clause, wherein the tension wheel assembly includes a tensioning system.

Sixty-nineth clause: The track system of any one of the sixty-sixth clause to the sixty-eighth clause, wherein at least two of the plurality of idler wheels are configured as a tandem.

Seventieth clause: The track system of any one of the sixty-sixth cause to the sixty-nineth clause, wherein a first idler wheel assembly and a second idler wheel assembly are mounted together to pivot about a pivot axis disposed longitudinally between the first and second idler wheel assemblies.

Seventy-first clause: The track system of any one of the sixty-sixth clause to the seventieth clause, wherein the inner surface of the endless track is free of lateral guide lugs.

Seventy-second clause: The track system of any one of the sixty-sixth clause to the seventy-first clause, wherein the endless track is configured to be laterally guided by only the central lugs.

Seventy-third clause: The track system of any one of the sixty-sixth clause to the seventy-second clause, wherein the endless track has an inversed T-shape.

Seventy-forth clause: The endless track of any one of the sixty-sixth clause to the seventy-third clause, wherein the wheel path height comprises a first wheel path height and a second wheel path height.

Seventy-fifth clause: An endless track for a track system, the endless track consisting of: a carcass defining a neutral axis, the carcass having: an inner surface, an outer surface opposite to the inner surface a plurality of longitudinally spaced central lugs extending from the inner surface a belting member disposed within the carcass; and the belting member being generally aligned with the neutral axis.

Seventy-sixth clause: The endless track of the seventy-fifth clause, wherein the body of the carcass consists essentially of elastomeric material.

Seventy-seventh clause: An endless track for a tracked vehicle, the endless track being configured to be disposed around a plurality of wheel assemblies, the endless track comprising: a carcass having: an inner surface and an outer surface opposite to the inner surface, the inner and outer surfaces defining a carcass thickness; a first lateral edge and a second lateral edge, the first and second lateral edge defining a carcass width; a plurality of central lugs configured to engage a sprocket wheel assembly, the plurality of central lugs being longitudinally spaced and extending from the inner surface, each one of the plurality of central lugs having a lug height, a lug base, a lug length, and a lug base width; a plurality of traction projections configured to engage a ground surface, the plurality of traction projections extending from the outer surface and defining a plurality of outer recesses; and the carcass being free of reinforcing members, and the inner surface is substantially planar.

Seventy-eighth clause: The endless track of the seventy-seventh clause, further comprising a belting member disposed within the carcass.

Seventy-nineth clause: The endless track of the seventy-seventh clause or of the seventy-eighth clause, wherein the belting member is disposed along a neutral axis of the carcass.

Eightieth clause: The endless track of any one of the seventy-seventh clause to the seventy-nineth clause, wherein the carcass consists essentially of elastomeric material.

Eighty-first clause: A vehicle comprising: a frame; an engine supported by the frame; and at least two track systems comprising a frame, a plurality of wheel assemblies and an endless track, the endless track comprising: a carcass free of reinforcing member, the carcass including: an inner surface; an outer surface; a first lateral edge; a second lateral edge; a plurality of central lugs extending from the inner surface, each central lug of the plurality of central lugs being longitudinally spaced from one another, and the plurality of central lugs being configured to engage with a sprocket wheel assembly; a plurality of traction projections extending from the outer surface, the plurality of traction projections being configured to engage with a ground surface, at least some of the plurality of traction projections defining outer recesses; and a belting member disposed within the carcass.

Eighty-second clause: A vehicle comprising: a frame; an engine supported by the frame; and at least two track systems comprising a frame, a plurality of wheel assemblies and an endless track, the endless track comprising: a track body having: a wheel-contacting surface, a ground-contacting surface distal from the wheel-contacting surface and defining a track thickness, a first lateral edge and a second lateral edge distal from the first lateral edge and defining a track width, a centerline bisecting the track width, and a reinforcing layer embedded in the track body and distal from the wheel-contacting surface; a plurality of central lugs adapted to be drivingly engageable with a sprocket wheel assembly, having a lug height, a base length, and a base width, and longitudinally spaced along the centerline and extending from the wheel-contacting surface; a plurality of traction lugs adapted to engage a ground surface, longitudinally spaced along the track and extending from the ground-contacting surface, and defining a plurality of inter-lug regions located between adjacent traction lugs; the plurality of central lugs being free of reinforcing members, the wheel-contacting surface being substantially planar, and a first lateral portion extending from the first lateral edge to the central lugs and a second lateral portion extending from the second lateral edge to the central lugs, and the first and second lateral portions are comprised within the wheel-contacting surface.

Eighty-third clause: A vehicle comprising: a frame; an engine supported by the frame; and at least two track systems comprising a frame, a plurality of wheel assemblies and an endless track, the endless track comprising: a carcass having: an inner surface and an outer surface opposite to the inner surface, the inner and outer surfaces defining a track thickness; a first lateral edge and a second lateral edge, the first and second lateral edge defining a track width; a plurality of central lugs configured to engage a sprocket wheel assembly, the plurality of central lugs being longitudinally spaced and extending from the inner surface, each one of the plurality of central lugs having a lug height, a lug base, a lug length, and a lug base width; a plurality of traction projections configured to engage a ground surface, the plurality of traction projections extending from the outer surface and defining a plurality of outer recesses; and a belting member disposed within the track body; the carcass being free of reinforcing members; and the inner surface being substantially planar.

Modifications and improvements to the above-described embodiments of the present technology may become apparent to those skilled in the art. The foregoing description is intended to be exemplary rather than limiting.

## Claims

1. An endless track for a track system, the endless track comprising:
a carcass free of reinforcing member, the carcass including:
an inner surface;
an outer surface;
a first lateral edge;
a second lateral edge;
a plurality of central lugs extending from the inner surface, each central lug of the plurality of central lugs being longitudinally spaced from one another, and the plurality of central lugs being configured to engage with a sprocket wheel assembly;
a plurality of traction projections extending from the outer surface, the plurality of traction projections being configured to engage with a ground surface, at least some of the plurality of traction projections defining outer recesses; and
a belting member disposed within the carcass.

2. The endless track of claim 1, wherein the plurality of central lugs is configured to laterally guide the endless track with respect to wheel assemblies of the track system.

3. The endless track of claim 1 or 2, wherein each one of the plurality of central lugs has a lug base length and a lug base height, a ratio of the lug height over the lug base length is equal or less than about 80%.

4. The endless track of claim 3, wherein a ratio of a longitudinal distance between two adjacent central lugs of the plurality of central lugs over the lug base length is equal or less than about 170%.

5. The endless track of any one of claims 1 to 4, wherein the belting member is a single set of cables.

6. The endless track of any one of claims 1 to 5, wherein the endless track defines a neutral axis, and the belting member is generally aligned with the neutral axis.

7. The endless track of any one of claims 1 to 6, wherein the belting member extends along at least about 55% of the track width.

8. The endless track of any one of claims 1 to 7, wherein the plurality of traction projections form a plurality of traction projection sets, each one of the plurality of traction projection sets including at least two longitudinally aligned traction projections.

9. The endless track of claim 8, wherein the plurality of traction projection sets defines an alternating sequence of long traction projections followed by short traction projections.

10. The endless track of any one of claims 1 to 9, wherein at least some of the plurality of traction projections are longitudinally aligned with the plurality of central lugs.

11. The endless track of any one of claims 1 to 10, wherein the plurality of outer recesses is generally aligned with a leading end of a base portion of a central lug, and a trailing end of a base portion of an adjacent central lug.

12. The endless track of any one of claims 1 to 11, wherein the inner surface has a first wheel engaging portion disposed on one side of the plurality of central lugs and a second wheel engaging portion disposed on an other side of the plurality of central lugs, the first lateral edge is vertically lower than the first wheel engaging portion, and the second lateral edge is vertically lower than the second wheel engaging portion.

13. The endless track of claim 12, wherein the inner surface further includes a first sloped portion extending between the first wheel engaging portion and the first lateral edge and a second sloped portion extending between the second wheel engaging portion and the second lateral edge, and the first and second sloped portions are configured to evacuate debris laterally outwardly from the first and second wheel engaging portions.

14. The endless track of claim 13, wherein the first and second sloped portions each have sloped portion width and a sloped portion height, and a ratio of the sloped portion height over the sloped portion width is at least about 20%.

15. A track system for a vehicle, the track system comprising:
a frame;
a plurality of wheel assemblies connected to the frame, the plurality of assemblies including at least one of a sprocket wheel assembly, an idler wheel assembly; and a support wheel assembly; and
an endless track according to any one of claims 1 to 14 at least partially surrounding the frame and the plurality of wheel assemblies.
